# EUROPÄISCHE PATENTSCHRIFT

(11) **EP 1 457 614 B1**
(45) Veröffentlichungstag und Bekanntmachung des Hinweises auf die Patenterteilung: **19.04.2006**
(21) Anmeldenummer: 03005520.6
(22) Anmeldetag: 11.03.2003
(51) Int. Cl.: E04B 9/00, F24D 3/16

(54) **Wand- oder Deckenverkleidung, die als thermische Austauschfläche ausgebildet ist**
Cladding for walls and ceiling in the form of a thermal exachange surface
Revêtement de murs et plafonds dans la forme d'une surface d'échange thermique

(43) Veröffentlichungstag der Anmeldung: 15.09.2004
(73) Patentinhaber: S+B INBAU S.A., 8181 Kopstal (LU)
(72) Erfinder: Sausmikat, Edgar, 54655 Malbergweich (DE)
(74) Vertreter: Schmitt, Armand

(56) Entgegenhaltungen:
- EP-A- 0 406 476
- EP-A- 0 971 177
- EP-A- 1 162 410
- EP-A- 1 278 018
- GB-A- 806 503
- US-A- 4 635 710

## Beschreibung

Die vorliegende Erfindung betrifft eine Wand- oder Deckenverkleidung welche als thermische Austauschfläche ausgebildet ist

### Stand der Technik

Wand- oder Deckenverkleidung welche für Kühl- oder Heizzwecke als thermische Austauschfläche ausgebildet werden, sind aus dem Stand der Technik wohl bekannt Sie umfassen eine Unterkonstruktion, die an der Wand oder Decke befestigt ist, mindestens eine Thermische Austauschplatte, die an der Unterkonstruktion befestigt ist und mindestens ein Wärmetauscherelement, das im wärmeleitenden Kontakt mit der Rückseite der Strahlungsplatte steht Das Wärmetauscherelement kann zum Beispiel ein Kupferrohr für Kalt- oder Warmwasser sein, das in ein Wärmeleitprofil aus Aluminium eingepresst ist Die Qualität des wärmeleitenden Kontakts zwischen Wärmetauscherelement und Rückseite der Strahlungsplatte bestimmt maßgeblich die Leistung der Wand- oder Deckenverkleidung als thermische Austauschfläche. Es bleibt anzumerken, dass der Wärmeübergang zwischen Strahlungsplatte und Raumluft natürlich auch einen gewissen Konvektionsanteil umfasst.

Um einen guten Wärmeübergang zwischen Wärmetauscherelement und Strahlungsplatte zu gewährleisten, ist es bekannt, das Wärmetauscherelement fest mit der Strahlungsplatte zu verbinden, z.B. es auf die Rückseite der Strahlungsplatte aufzuideben. Dies bedeutet jedoch, dass Kühl- oder Wärmekreise erst bei der Montage der Strahlungsplatten geschlossen werden können, bzw. dass für die Demontage einer Strahlungsplatte der entsprechende Kühl- oder Heizkreis aufgetrennt werden muss. Zudem sind für manuell hergestellte Klebeverbindungen, Mangel die den Wärmeübergang beeinträchtigen nicht auszuschließen.

Es ist ebenfalls bekannt, das Wärmetauscherelement einfach auf die Rückseite der Strahlungsplatte aufzulegen, wobei das Gewicht des Wärmetauscherelementes einen wärmeleitenden Kontakt zwischen Wärmetauscherelement und Rückseite der Strahlungsplatte gewährleisten soll. Um mit diesem System gute Resultate zu erzielen, müsste man mit relativ schweren Warmetauscherelementen arbeiten, was jedoch nicht unbedingt erwünscht ist Zudem ist dieses System bei senkrechten Wandverkleidungen nicht einsetzbar.

In der EP 0406476 und der DE 19748739 wird vorgeschlagen, die Wärmetauscherelemente mittels separaten Lagerschienen am Unterbau zu befestigen und sie mit Haltemagneten auszustatten, welche die Strahlungsplatte an sich ziehen. Für diese Lösung ist jedoch unbedingt erforderlich, dass die Strahlungsplatten aus einem dünnwandigen, ferromagnetischen Blech hergestellt sind. Strahlungsplatten aus Aluminium oder Gipskarton scheiden z.B. aus. Weiterhin ist festzustellen, dass die Haltemagnete relativ teuer sind, dass keine Erfahrungen über die Zeitbeständigkeit ihrer Haftkraft vorliegen, und dass in verschiedenen Räumen Magnetfelder nicht unbedingt erwünscht sind.

In der GB 806,503 aus dem Jahre 1955 wird ein Heiz- oder Kühlsystem mit paneelförmigen Bauteilen beschrieben, mit denen sich z.B. Decken oder Fußböden herstellen lassen. Es handelt sich bei diesem System also eindeutig nicht um eine Wand- oder Deckenverkleidung sondem um tragende Bauteile. Diese tragenden Bauteile setzen sich aus nebeneinanderliegende Stahlblechkanälen zusammen, welche mittels einer hölzernen Schalung verschlossen werden. Diese Verschalung bildet dann entweder einen Fußboden oder ein Dach aus. Innerhalb der Stahlblechkanäle erstrecken sich Heiz- oder Kühlrohre mit einem D-förmigen Querschnitt. Diese Rohre können an die Innenseite der Basis der Stahlblechkanäle angeklebt sein oder mittels Federn an diese Innenseite angedrückt werden. Rohre und Federn werden in die Stahlblechkanäle integriert und hierin an hölzernen Tragleisten befestigt bevor die offenen Stahlblechkanäle mit der hölzernen Schalung verschlossen werden.

Bei einer Wand- oder Deckenverkleidung in welcher die Strahlungsplatten, im Gegensatz zu dem System aus der GB 806.503. mittels einer Unterkonstruktion an einer Wand oder Decke befestigt werden, sollte es jedoch möglich sein, das Wärmetauscherelement vor Montage der Strahlungsplatten an der Unterkonstruktion zu befestigen.

In der EP 1 278 018 ist eine Deckenstrahlheizung beschrieben in der ein Plattenelement Rohraufnahmesicken aufweist welche ein in diese Sicken eingedrücktes Rohr nach Art einer Clipverbindung zurückhalten. Auf dieses Plattenelement wird anschließend ein Abdeckelement aufgeclipt. Eine solche Clipverbindung gewährleistet wohl kaum einen guten Wärmeübergang vom Rohr auf das Plattenelement, geschweige denn auf das Abdeckelement.

In der EP 0 971 177 ist eine Strahlheizflächenkonstruktion beschrieben in welcher die elastischen Strahlplatten zwischen die parallelen Heizrohre eines Heizregisters eingedrückt und eingerastet sind. Diese Strahlplatten weisen hierzu Randaufkantungen mit einem angerollten Radius auf, welche an der Hinterseite der Heizrohre anliegen. Spezielle Klemmfedem halten sie zusätzlich im Bereich ihrer Aufkantungen. Bei dieser Strahlheizflächenkonstruktion liegt die Vorderseite der Heizrohre frei, so dass sie keine kontinuierliche Oberfläche aufweist.

### Aufgabe der Erfindung

Es ist eine Aufgabe der vorliegenden Erfindung eine als thermische Austauschfläche ausgebildete Wand- oder Deckenverkleidung vorzuschlagen, welche die vorerwähnten Nachteile nicht, bzw. nur in einem verminderten Maße aufweist Diese Aufgabe wird erfindungsgemäß durch eine Wand- oder Deckenverkleidung nach Anspruch 1 gelöst Vorteilhafte Ausgestaltungen der Erfindung werden in den Unteransprüchen definiert

### Kennzeichnung der Erfindung

Eine erfindungsgemäße Wand- oder Deckenverkleidung umfasst, in bekannter Art und Weise, eine Unterkonstruktion, die an der zu verkleidenden Wand oder Decke befestigt ist, mindestens eine Strahlungsplatte die an der Unterkonstruktion befestigt ist, und mindestens ein Wärmetauscherelement im wärmeleitenden Kontakt mit der Rückseite der Strahlungsplatte. Erfindungsgemäß wird das Wärmetauscherelement von der Unterkonstruktion derart getragen, dass es senkrecht zur Rückseite der Strahlungsplatte einen Bewegungsfreiheitsgrad aufweist Federmittel sind hierbei dem Wärmetauscherelement derart zugeordnet, dass sie das Wärmetauscherelement an die Rückseite der Strahlungsplatte anpressen. In der Unterkonstruktion ist hierbei ein Endanschlag für das Wärmetauscherelement derart festlegt, dass vor Montage der Strahlungsplatte, die Federmittel das Wärmetauscherelement gegen den Endanschlag drücken und dass nach definitiver Montage der Strahlungsplatte, die Strahlungsplatte das Wärmetauscherelement von dem Endanschlag hebt. Durch diesen Endanschlag ist gewährleistet, dass das Wärmetauscherelement auch vor Montage der Strahlungsplatte bereits in einer vordefinierten Stellung fixiert ist und die Federmittel bereits vorgespannt sind. Diese vorgespannten Federmittel gewährleisten, dass sofort nach Abheben des Wärmetauscherelementes von seinem Endanschlag, eine ausreichend starke Federkraft das Wärmetauscherelement an die Rückseite der Strahlungsplatte anpresst. Sie erzeugen einen ausreichend hohen Anpressdruck zwischen Wärmetauscherelement und Strahlungsplatte, um stets einen einwandfreien Wärmeübergang zu gewährleisten. Falls erforderlich, kann der Anpressdruck weitaus höher ausgelegt werden als dies mit Haltemagneten der Fall ist Das Material der Strahlungsptatten oder ihre Wandstärke spielt für den Einsatz der erfindungsgemäßen Lösung keine Rolle. Im Vergleich zu den bekannten Haltemagneten haben geeignete Federmittel einen sehr geringen Anschaffungspreis. Die Zeitbeständigkeit von Federmitteln ist zudem nicht in Frage gestellt und Federmittel erzeugen selbstverständlich auch keine magnetische Raumbelastung. Die Erfindung ermöglicht es weiterhin, dass Wärmetauscherelement und Strahlungsplatte unabhängig voneinander an der Unterkonstruktion befestigt werden können. Dies vereinfacht die Montage, und das Warmetauscherelement muss nicht zuerst aus einem Kühl- oder Heizkreis herausgetrennt werden, bevor die Strahlungsplatte demontiert wird. Die erforderlich Anpresskraft wird bei der Montage der Strahlungsplatte automatisch erzeugt und dauerhaft sichergestellt.

Betreffend die Auswahl der Federmittel gibt es eigentlich keine Einschränkung. Es können z.B. Spiralfedem und/oder Luftfedem und/oder elastische Montageunterlagen eingesetzt werden. Bevorzugt wird jedoch eine einfache Blattfeder eingesetzt, welche sich auf der Unterkonstruktion abstützt um auf das Wärmetauscherelement in Richtung der Rückseite der Strahlungsplatte eine Federkraft auszuüben. Eine solche Blattfeder ist in der Tat einfach und platzsparend zu montieren, preisgünstig in der Anschaffung und äußerst dauerhaft Um die Kraftübertragung zu optimieren, kann die Blattfeder in Richtung der zu übertragenden Federkraft eine Wölbung aufweisen.

In einer vorteilhaften, weil u.a. besonders einfachen und kostengünstigen Ausführung, umfasst die Unterkonstruktion mindestens einen Tragflansch mit mindestens einer Öffnung, wobei das Wärmeaustauscherelement durch eine Einmündung teilweise in die Öffnung des Tragflansches hineinragt Seitliche Hakenteisten am Wärmeaustauscherelement wirken dann mit innenliegenden Rändern der Einmündung zusammen um den Endanschlag für das Wärmetauscherelement festzulegen. Bei dieser Ausführung kann z.B. eine gewölbte Blattfeder derart in die Öffnung des Tragflansches eingespannt werden, dass sie mit ihrer konvexen Seite an dem Wärmetauserelement anliegt.

In einer bevorzugten Weifierbildung umfasst die Unterkonstruktion ein U-Profil, das zwei symmetrisch gestaltete Tragflansche aufweist. Eine gewölbte Blattfeder ist dann in symmetrische Öffnungen des ersten und zweiten Tragflansches derart eingespannt, dass sie zwischen den beiden Tragflanschen über ihre gesamte Länge an dem Wärmetauscherelement anliegt. Diese Lösung gewährleistet mit einfachen Mitteln, dass die Federkraft stets unter optimalen Bedingungen auf das Wärmetauscherelement übertragen wird.

In einer vorteilhaften Ausgestaltung umfasst das Wärmetauscherelement ein Rohr für ein Wärme- oder Kaltemedium und ein Warmeleitprofil das wärmeleitend mit dem Rohr verbunden ist und einen großflächigen Anpressfuß aufweist, mit dem es an die Strahlungsplatte angepresst wird. Mittig auf dem Anpressfuß ist dann vorteilhaft eine Befestigungsleiste angeordnet, wobei das Rohr in eine zylindrische Mulde dieser Befestigungsleiste eingepresst ist

### Figurenaufstellung

im folgenden wird nun eine bevorzugte Ausgestaltung der Erfindung anhand der beiliegenden Figuren beschrieben- Es zeigen:
Fig. 1: einen Schnitt durch eine als Kühldecke ausgebildete Deckenverkleidung;
Fig. 2: ein vergrößertes Detail der Fig. 1; und
Fig. 3: einen Schnitt entlang der Schnittlinie 3-3 der Fig. 2.

### Beschreibung einer bevorzugten Ausgestaltung der Erfindung anhand der Figuren

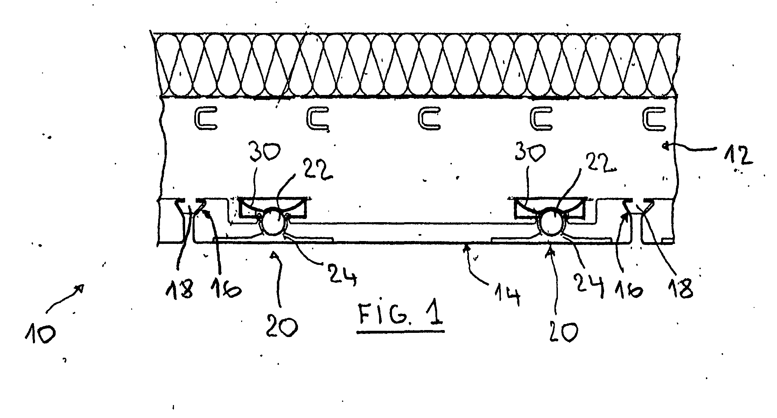

In Fig. 1 wird ein erfindungsgemäßer Aufbau einer als Kühldecke ausgebildeten Deckenverkleidung 10 gezeigt. Diese Deckenverkleidung 10 ist an einer Rohdecke (nicht gezeigt) mittels einer Unterkonstruktion 12 befestigt. Von dieser Unterkonstruktion ist in Fig.1 lediglich ein horizontale Tragschiene sichtbar, für die nachfolgend ebenfalls das Bezugszeichen 12 benutzt wird. Für die Befestigung dieser Tragschienen 12 an der Rohdecke werden z.B. handels-Ubliche Spezialhänger (nicht gezeigt) für abgehängte Decken eingesetzt

Die eigentliche Austauschfläche wird durch Strahlungsplatten 14 ausgebildet In Fig. 1 handelt es sich z.B. um handelsüblich Metall-Dedcenplatten, die mittels ihrer seitlichen Ränder 16 in Hakenelementen 18 der Tragschienen 12 festgeklammert sind. Als StrahlungsplatGen kommen jedoch auch Gipskartonplatten oder Deckenbekleidungen aus anderen Materialien in Frage, insofern eine gute Wärmeleitung In den Strahlungsplatten gewährleistet ist.

Die Strahlungsplatten 14 werden rückseitig mittels Wärmetauscherelementen 20 gekühlt. In der beispielhaften Ausführung bestehen Wärmetauscherelemente 20 aus Kupferrohren 22, die in ein stranggepresstes Wärmeleitprofil 24 aus Aluminium eingepresst sind. Die Kupferrohe 22 sind in einen Kühlwasserkreis (nicht gezeigt) eingebunden und werden vom Kühlwasser durchströmt.

Erfindungsgemäß werden die Wärmetauscherelemente 20 von der Unterkonstruktion 12 derart getragen, dass sie senkrecht zur Rückseite der Strahlungsplatte 14 einen Bewegungsfteiheitsgrad aufweisen, wobei jedem Wärmetauscherelement 20 Federmittel 30 derart zugeordnet sind, dass sie das Wärmetauscherelement 20 an die Rückseite der Strahlungsplatte 14 anpressen.

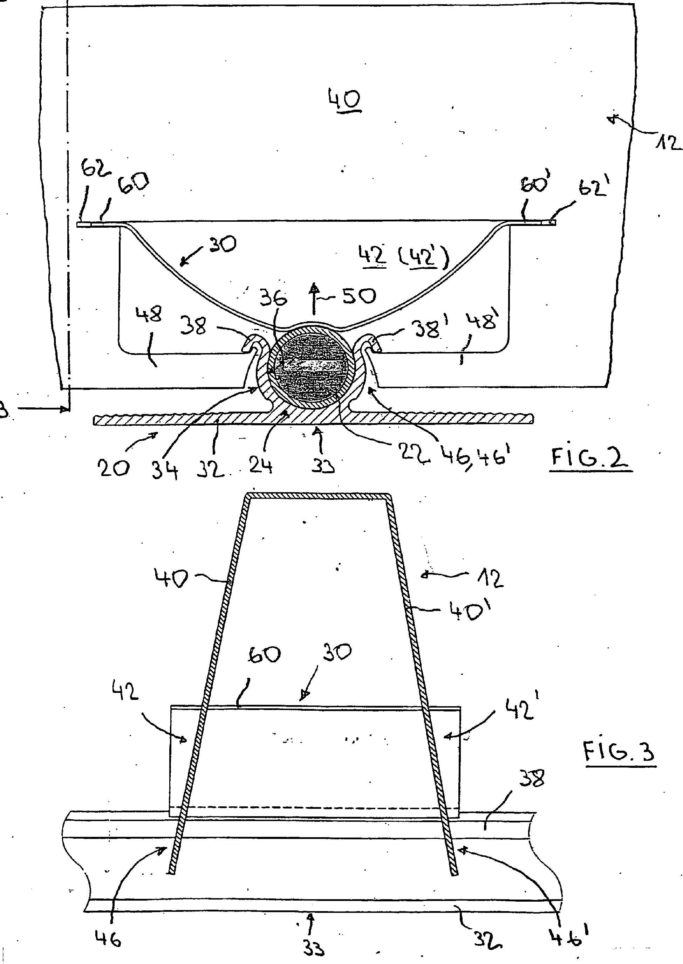

Das Wärmetauscherelement 20 selbst und seine Montage in den Tragschienen 12 werden nun anhand Fig. 2 und Fig. 3 eingehender beschrieben.

In Fig. 2 sieht man einen Querschnitt durch das Wärmetauscherelement 20. Man erkennt, dass das Wärmeleitprofil 24 einen Anpressfuß 32 aufweist, der eine relativ breite Anpressfläche 33 ausbildet. Mit dieser Anpressfläche 33 wird das Wärmeleitprofil 24, wie in Fig. 1 dargestellt, an die Rückseite der Strahlungsplatte 14 angepresst. Der Anpressfuß 32 gewährleistet einen großflächigen Kontakt zwischen Strahlungsplatte 14 und Wärmeleitprofil 24 und somit einen ausgezeichneten Wärmefluss. Mittig auf dem Anpressfuß 32 ist eine Befestigungsleiste 34 angeordnet Das Kupferrohr 22 ist Jn eine zylindrische Mulde 36 dieser Befestigungsleiste 34 derart eingepresst, dass ein ausgezeichneter Wärmeübergang zwischen Kupferrohr 22 und Wärmeleitprofil 24 gewährleistet ist. Die Befestigungsleiste 34 dient auch zur Montage des Wärmetauscherelements 20 in den Tragschienen 12. Hierzu weist sie an ihrem oberen Ende zwei seitlich abstehende Hakenleisten 38, 38' auf.

Aus Fig. 3 ist ersichtlich, dass die Tragschiene 12 ein U-förmiges Profil mit zwei symmetrischen Flanschen 40, 40' ist. Fig. 2 zeigt eine Draufsicht auf den Flansch 40. Man erkennt eine Öffnung 42 im Flansch 40, welche eine Einmündung 46 aufweist, die zwischen zwei Zungen 48, 48' ausgebildet ist Im Flansch 40' ist eine symmetrisch gestaltete Öffnung 42' mit einer Einmündung 46' vorgesehen. Die Befestigungsleiste 34 des Wärmeaustauscherelementes 20 ragt durch die jeweilige Einmündung 46, 46' teilweise in die jeweilige Öffnung 42, 42' des jeweiligen Flansches 40, 40' hinein.

In Fig. 2, ist das Wännetauscherelement 20 vor Montage der Strahlungsplatte 14 gezeigt Die Befestigungsleiste 34 liegt mittels ihrer seitlichen Hakenleisten 38, 38' auf den Zungen 48, 48' auf, oder genauer gesagt, die vorgespannten Federmittel 30 drücken das Wärmetauscherelement 20 in eine untere Endanschlagstellung, in welcher es mittels seiner seitlichen Hakenleisten 38, 38' an die Zungen 48, 48' angepresst wird, so dass es in dieser Endanschlagstellung vorläufig fixiert ist.

Beim Festklemmen der Strahlungsplatte 14 in den Tragschienen 12, wird das Wärmetauscherelement 20 von der Rückseite der Strahlungsplatte 14 in Richtung des Pfeils 50 gedrückt Hierbei wird das Wärmetauscherelement 20 aus seiner Endanschlagstellung herausbewegt, so dass die Federmittel 30 das Warmetauscherelement 20 nun mittels seinem Anpressfuß 32 an die Rückseite der Strahlungsplatte 14 anpressen. Da die Federmittel 30 vorgespannt sind, liegt sofort nach Abheben des Wärmetauscherelementes 20 aus seiner Endanschlagstellung ein ausreichender Anpressdruck vor.

Eine bevorzugte Ausgestaltung der Federmittel 30 wird nun anhand von Fig. 2 und Fig. 3 beschrieben. Die eingesetzten Federmittel sind eine gewölbte Blattfeder 30 aus Federstahlblech. Wie aus Fig. 3 ersichtlich, ist die Länge dieser Blattfeder 30 etwas größer als der Abstand zwischen den beiden Flanschen 40, 40'. Ein Kopfende der Blattfeder 30 ist in die Öffnungen 42 des Flansches 40, das andere Kopfende ist in die Öffnungen 42' des Flansches 40' eingespannt Zwischen den beiden Flanschen 40, 40' bildet die Blattfeder 30 eine gewölbte Fläche aus, deren konvexe Seite dem Wärmetauscherelement 20 zugekehrt ist, wobei die Blattfeder 30 über ihre gesamte Länge an das Kupferrohr 22 angedrückt wird. Die zwei gegenüberliegenden Längsseiten der Blattfeder 30 sind als Befestigungsflansche 60, 60' ausgebildet, die In entsprechende Befestigungsschlitze 62, 62' der beiden Flansche 40, 40' eingeführt sind.

Es ist anzumerken, dass der vorbeschriebene Aufbau mit minimalen Abänderungen auch für eine Wandverkleidung übernommen werden kann. Weiterhin ist hervorzuheben, dass die Wärmetauscherelemente 20 auch mit Warmwasser beaufschlagt werden können, so dass eine warme Strahlfläche für Heizungszwecke ausgebildet wird.

## Patentansprüche

1. Wand- oder Deckenverkleidung umfassend:
eine Unterkonstruktion (12), die an der zu vendeidenden Wand oder Decke befestigt ist;
mindestens eine Strahlungsplatte (14), die an- der Unterkonstruktion (12) befestigt ist: und
mindestens ein Wärmetauscherelement (20) im wärmeleitenden Kontakt mit der Rückseite der Strahlungsplatte (14), **dadurch gekennzeichnet, dass**:
das Wärmetauscherelement (20) von der Unterkonstruktion (12) derart getragen wird, dass es senkrecht zur Rückseite der Strahlungsplatte (14) einen Bewegungsfreiheitsgrad aufweist, und
Federmittel (30) dem Wärmetauscherelement (20) derart zugeordnet sind, dass sie das Wärmetauscherelement (20) an die Rückseite der Strahlungsplatte (14) anpressen;
wobei in der Unterkonstruktion (12) ein Endanschlag (48, 48') für das Wärmetauscherelement (20) derart festlegt ist dass, vor Montage der Strahlungsplatte (14), die Federmittel (30) das Wärmetauscherelement (20) gegen den Endanschlag (48, 48') drücken können, und dass, nach definitiver Montage der Strahlungsplatte (14), die Strahlungsplatte (14) das Wärmetauscherelement (20) von dem Endanschlag heben kann.

2. Wand- oder Deckenverkleidung nach Anspruch 1, **dadurch gekennzeichnet, dass** die Federmittel eine Blattfeder (30) umfassen, welche sich auf der Unterkonstruktion (12) abstützt, um auf das Wärmetauscherelement (20) in Richtung der Rückseite der Strahlungsplatte (14) eine Federkraft auszuüben.

3. Wand- oder Deckenverkleidung nach Anspruch 2, **dadurch gekennzeichnet, dass** die Blattfeder (30) in Richtung der zu übertragenden Federkraft eine Wölbung aufweist.

4. Wand- oder Deckenverkleidung nach Anspruch 1, **dadurch gekennzeichnet, dass** die Federmittel (30) eine Vorspannung aufweisen, wenn das Wärmetauscherelement (20) in Endanschlag ist

5. Wand- oder Deckenverkleidung nach Anspruch 1 oder 4, **dadurch gekennzeichnet, dass**:
die Unterkonstruktion (12) mindestens einen Tragflansch (40, 40') mit mindestens einer Öffnung (42) umfasst, wobei das Wärmeaustauscherelement (20) durch eine Einmündung (46) teilweise in die Öffnung (42) des Tragflansches (40, 40') hineinragt, und
seitliche Hakenleisten (38, 38') am Wärmeaustauscherelement (20) mit innenliegenden Rändern der Einmündung (48) zusammenwirken, um den Endanschlag für das Wärmetauscherelement (20) festzulegen.

6. Wand- oder Deckenverkleidung nach Anspruch 5, **dadurch gekennzeichnet, dass** eine gewölbte Blattfeder (30) derart in die Öffnung (42) des Tragflansches e(40, 40') eingespannt ist, dass sie mit ihrer konvexen Seite an dem Wärmetauscherelement (20) anliegt.

7. Wand- oder Deckenverkleidung nach einem der Ansprüche 5 oder 6, **dadurch gekennzeichnet, dass** die Unterkonstruktion ein U-Profil (12) aufweist, das zwei symmetrisch gestaltete Tragflansche (40, 40') aufweist, wobei eine gewölbte Blattfeder in symmetrische Öffnungen (42) des ersten und zweiten Tragflansches (40, 40') derart eingespannt ist, dass sie zwischen den beiden Tragflanschen (40, 40') über ihre gesamte Lange an dem Wärmetauscherelement (20) anliegt

8. Wand- oder Deckenverkleidung nach einem der Ansprüche 1 bis 7, **dadurch gekennzeichnet, dass** das Wärmetauscherelement (20) umfasst
ein Rohr (22) für ein Wärme- oder Kattemedium; und
ein Wärmeleitprofil (24) das wärmeleitend mit dem Rohr (22) verbunden ist und einen großflächigen Anpressfuß (32) aufweist, mit dem es an die Strahlungsplatte (14) angepresst wird.

9. Wand- oder Deckenverkleidung nach Anspruch 8, **dadurch gekennzeichnet, dass** das Wärmeleitprofil (24) eine mittig auf dem Anpressfuß (32) angeordnete Befestigungsleiste (34) aufweist, wobei das Rohr in eine zylindrische Mulde (36) dieser Befestigungsleiste (34) eingepresst ist.

## Claims

1. Wall or ceiling lining comprising:
a sub-structure (12), which is fastened to the wall or ceiling to be lined;
at least one radiation plate (14), which is fastened to the sub-structure (12); and
at least one heat exchanger element (20) in heat-conducting contact with the rear side of the radiation plate (14), **characterized in that**:
the heat exchanger element (20) is supported by the sub-structure (12) in such a way that it has a degree of freedom of movement perpendicular to the rear side of the radiation plate (14), and
spring means (30) are assigned to the heat exchanger element (20) in such a way that they press the heat exchanger element (20) against the rear side of the radiation plate (14);
wherein, in the sub-structure (12) an end stop (48, 48') for the heat exchanger element (20) is secured in such a way that, prior to fitting of the radiation plate (14), the spring means (30) can force the heat exchanger element (20) against the end stop (48, 48') and that, following final fitting of the radiation plate (14), the radiation plate (14) can lift the heat exchanger element (20) off the end stop.

2. Wall or ceiling lining according to Claim 1, **characterized in that** the spring means comprise a leaf spring (30), which is supported on the sub-structure (12) so as to apply a spring force to the heat exchanger element (20) in the direction of the rear side of the radiation plate (14),

3. Wall or ceiling lining according to Claim 2, **characterized in that** the leaf spring (30) has a curvature in the direction of the spring force to be transmitted

4. Wall or ceiling lining according to Claim 1, **characterized in that** the spring means (30) have a preload when the heat exchanger element (20) is in the end stop position.

5. Wall or ceiling lining according to Claim 1 or 4, **characterized in that**:
the sub-structure (12) comprises at least one supporting flange (40, 40') having at least one opening (42), the heat exchanger element (20) extending, through an inlet channel (46) partially into the opening (42) in the supporting flange (40, 40'), and
lateral hook bars (38, 38') on the heat exchanger element (20) cooperate with inner rims of the inlet channel (46) so as to secure the end stop for the heat exchanger element (20).

6. Wall or ceiling lining according to Claim 5, **characterized in that** a curved leaf spring (30) is clamped in such a way in the opening (42) in the supporting flange (40, 40') that it bears with its convex side against the heat exchanger element (20).

7. Wall or ceiling lining according to one of Claims 5 or 6, **characterized in that** the sub-structure has a U-profile (12), which has two symmetrically shaped supporting flanges (40, 40'), a curved leaf spring being clamped in symmetrical openings (42) in the first and second supporting flanges (40, 40') in such a way that, between the two supporting flanges (40, 40'), it bears over the whole of its length against the heat exchanger element (20).

8. Wall or ceiling lining according to one of Claims 1 to 7, **characterized in that** the heat exchanger element (20) comprises
a pipe (22) for a heating or refrigerating medium; and
a heat-conducting profile (24), which is connected in a heat-conducting manner to the pipe (22) and has an extensive pressure foot (32) with which it is pressed against the radiation plate (14).

9. Wall or ceiling lining according to Claim 8, **characterized in that** the heat-conducting profile (24) has a fastening bar (34) centrally disposed on the pressure foot (32), the pipe being pressed into a cylindrical trough (36) in this fastening bar (34).

## Revendications

1. Revêtement de paroi ou de plafond, qui comprend :
une sous-structure (12) qui est fixée sur la paroi ou le plafond à revêtir,
au moins une plaque radiante (14) qui est fixée sur la sous-structure (12) et
au moins un élément échangeur de chaleur (20) en contact thermiquement conducteur avec le côté arrière de la plaque radiante (14), **caractérisé en ce que** :
l'élément échangeur de chaleur (20) est porté par la sous-structure (12) de manière à présenter un degré de liberté de déplacement perpendiculairement au côté arrière de la plaque radiante (14) et **en ce que**
des moyens élastiques (30) sont disposés sur l'élément échangeur de chaleur (20) de telle sorte qu'ils repoussent l'élément échangeur de chaleur (20) contre le côté arrière de la plaque radiante (14),
une butée (48, 48') de l'élément échangeur de chaleur (20) étant fixée dans la sous-structure (12) de telle sorte qu'avant le montage de la plaque radiante (14), les moyens élastiques (30) peuvent repousser l'élément échangeur de chaleur (20) contre la butée (48, 48') et **en ce qu'**après le montage définitif de la plaque radiante (14), la plaque radiante (14) peut relever l'élément échangeur de chaleur (20) de la butée.

2. Revêtement de paroi ou de plafond selon la revendication 1, **caractérisé en ce que** les moyens élastiques comprennent un ressort à lame (30) qui s'appuie sur la sous-structure (12) pour exercer sur l'élément échangeur de chaleur (20) une force élastique orientée en direction du côté arrière de la plaque radiante (14).

3. Revêtement de paroi ou de plafond selon la revendication 2, **caractérisé en ce que** le ressort à lame (30) présente une courbure orientée dans la direction de la force élastique à transmettre.

4. Revêtement de paroi ou de plafond selon la revendication 1, **caractérisé en ce que** les moyens élastiques (30) présentent une précontrainte lorsque l'élément échangeur de chaleur (20) se trouve dans la butée

5. Revêtement de paroi ou de plafond selon les revendications 1 ou 4, **caractérisé en ce que**
la sous-structure (12) comprend au moins une bride de support (40, 40') dotée d'au moins une ouverture (42), l'élément échangeur de chaleur (20) débordant partiellement dans l'ouverture (42) de la bride de support (40, 40') par l'intermédiaire d'une entrée (46) et **en ce que**
des lattes latérales d'accrochage (38, 38') prévues sur l'élément échangeur de chaleur (20) coopèrent avec le bord intérieur de l'entrée (46) pour fixer la butée pour l'élément échangeur de chaleur (20).

6. Revêtement de paroi ou de plafond selon la revendication 5, **caractérisé en ce qu'**un ressort à lame bombé (30) est serré dans l'ouverture (42) de la bride de support (40, 40') de telle sorte que son côté convexe repose contre l'élément échangeur de chaleur (20).

7. Revêtement de paroi ou de plafond selon l'une des revendications 5 ou 6, **caractérisé en ce que** la sous-structure présente un profilé en U (12) qui présente deux brides de support (40, 40') de configuration symétrique, un ressort à lame bombé étant serré dans des ouvertures symétriques (42) de la première et de la deuxième bride de support (40, 40') de telle sorte qu'il repose par toute sa longueur sur l'élément échangeur de chaleur (20) entre les deux brides de support (40, 40').

8. Revêtement de paroi ou de plafond selon l'une des revendications 1 à 7, **caractérisé en ce que** l'élément échangeur de chaleur (20) comprend
un tube (22) pour un fluide de chauffage ou de refroidissement et
un profilé (24) thermiquement conducteur qui est relié au tube (22) de manière thermiquement conductrice et qui présente un pied de poussée (32) de grande surface par lequel il est repoussé contre la plaque radiante (14).

9. Revêtement de paroi ou de plafond selon la revendication 8, **caractérisé en ce que** le profilé, thermiquement conducteur (24) présente une latte de fixation (34) disposée au milieu du pied de poussée (32), le tube étant enfoncé dans une cavité cylindrique (36) de cette latte de fixation (34).
